Europäisches Patentamt

European Patent Office

Office européen des brevets

(11) Veröffentlichungsnummer: **0 316 035 B1**

(12) **EUROPÄISCHE PATENTSCHRIFT**

(45) Veröffentlichungstag der Patentschrift: **01.06.94**

(21) Anmeldenummer: **88202443.3**

(22) Anmeldetag: **02.11.88**

(51) Int. Cl.⁵: **B29C 45/76**

(54) **Verfahren zur Steuerung des Nachdruckzeitverlaufes einer Spritzgiessmaschine.**

(30) Priorität: **07.11.87 DE 3737959**

(43) Veröffentlichungstag der Anmeldung:
**17.05.89 Patentblatt 89/20**

(45) Bekanntmachung des Hinweises auf die
Patenterteilung:
**01.06.94 Patentblatt 94/22**

(84) Benannte Vertragsstaaten:
**AT CH DE FR GB IT LI NL**

(56) Entgegenhaltungen:

KUNSTSTOFFE, Band 73, Nr. 5, Mai 1983, Seiten 241-245, München, DE; K. GISSINGet al.: "Zum optimalen Nachdruckverlauf beim Spritzgiessen thermoplastischerKunststoffe"

PLASTVERARBEITER, Band 35, Nr. 5, Mai 1984, Seiten 74-81, Speyer, DE; W.KOTZAB: "Exakte Temperierung bei geringem Kostenaufwand"

KUNSTSTOFFBERATER, Band 25, Januar/Februar 1980, Seiten 31-33; W. BONGARDT etal.: "Selbsteinstellende mikrorechnergeführte Spritzgiessmaschine"

(73) Patentinhaber: **Philips Patentverwaltung GmbH**
**Wendenstrasse 35c**
**D-20097 Hamburg(DE)**

(84) Benannte Vertragsstaaten:
**DE**

(73) Patentinhaber: **N.V. Philips' Gloeilampenfabrieken**
**Groenewoudseweg 1**
**NL-5621 BA Eindhoven(NL)**

(84) Benannte Vertragsstaaten:
**CH FR GB IT LI NL AT**

(72) Erfinder: **Langlois, Jaques**
**Adam-Riese-Strasse 2**
**D-3502 Vellmar(DE)**

(74) Vertreter: **Kupfermann, Fritz-Joachim, Dipl.-Ing. et al**
**Philips Patentverwaltung GmbH,**
**Wendenstrasse 35c**
**D-20097 Hamburg (DE)**

# EP 0 316 035 B1

**Beschreibung**

Die Erfindung bezieht sich auf ein Verfahren zur Steuerung des Nachdruckzeitverlaufes einer Spritzgießmaschiene mit einer Plastifizier- und Spritzeinheit entsprechend den Merkmalen des Oberbegriffs des Patentanspruches 1.

Beim Spritzgießen wird die pulverförmige oder granulierte Formmasse durch Erwärmung mittels an dem Schneckengehäuse angebrachter Heizungen plastifiziert und während der Formfüllphase (Formfüllzeit) durch axiale Verschiebung der Schnecke in Richtung Einspritzdüse in das Formwerkzeug gedrückt. Hat sich das Formwerkzeug vollkommen mit der Formmasse gefüllt, so erstarrt dieses durch Abkühlen. Nach der Formfüllphase beginnt die Nachdruckphase (Nachdruckzeit), in welcher der von dem hydraulischen Druckantrieb erzeugte Druck kontinuierlich bis auf Normaldruck abnimmt. Hierbei soll möglichst keine Formmasse aus dem Werkzeug heraus- bzw. in das Werkzeug hineinfließen. Nach der Nachdruckphase beginnt die Entformungsphase (Entformungszeit), in der sich das Werkzeug öffnet und das Formteil ausgeworfen wird. Gleichzeitig bewegt sich die Schnecke von der Einspritzdüse fort.

Aus der Veröffentlichung "Prozeßrechnereinsatz beim Spritzgießen" von Dr.-Ing. Matzke, Technisch-wissenschaftlicher Bericht des Instituts für Kunststoffverarbeitung an der Rheinisch-Westfälischen Technischen Hochschule Aachen, ist das eingangs erwähnte Verfahren zur Steuerung des Nachdruckzeitverlaufes einer Spritzgießmaschine bekannt. Dieses Verfahren, genannt pVT-Optimierung, vermeidet Materialbewegungen während der Nachdruckphase. Hierbei wird für einen bestimmten Sollwert des spezifischen Volumens beim Normaldruck (1 bar) die Nachdruckzeit berechnet. Die Berechnung der Nachdruckzeit erfolgt über eine aus der Wärmeleitungsgleichung abgeleitete vereinfachte Formel. Die berechnete Nachdruckzeit wird in äquidistante Zeitabschnitte unterteilt. Danach wird zu jeder Zeitstützstelle der entsprechende Temperaturwert berechnet. Die Nachdruckzeit läßt sich anschließend aus einer Formel ermitteln, die einen Zusammenhang zwischen dem spezifischen Volumen, dem Druck und der Temperatur im Formteil herstellt. Die berechneten Temperatur- und Druckwerte gelten für eine bestimmte Formmasse-Temperatur und eine bestimmte Werkzeug-Temperatur.

Ändert sich die Formmasse- und/oder die Werkzeugtemperatur wird eine neue Nachdruckzeit berechnet. Anschließend wird diese Nachdruckzeit in äquidistante Zeitabschnitte unterteilt und zu jeder Zeitstützstelle ein neuer Temperaturwert ermittelt. Daraufhin läßt sich ein neuer Druckwert berechnen. Das bekannte Verfahren weist sehr viele Rechenschritte auf, so daß bei Verwendung eines handelsüblichen Prozeßrechners bei einer Veränderung der Temperatur der Formmasse oder des Werkzeuges eine Nachdruckveränderung nicht beim laufenden oder folgenden, sondern erst beim nächsten Spritzgießzyklus vorgenommen werden kann.

Der Erfindung liegt daher die Aufgabe zugrunde, ein Verfahren zur Steuerung des Nachdruckzeitverlaufes einer Spritzgießmaschine zu schaffen, bei dem ein neuer Nachdruckzeitverlauf bei Verwendung eines handelsüblichen Prozeßrechners für den laufenden oder folgenden Spritzgießzyklus vorgenommen wird.

Diese Aufgabe wird bei einem Verfahren der eingangs genannten Art durch die kennzeichnenden Merkmale des Patentanspruches 1 gelöst.

Die zum Referenz-Nachdruckzeitverlauf zugehörigen Referenz-Temperaturwerte wird anhand der Gleichung

$$Ti = Tf + (Tm - Tf) * F(m, a * tn * \frac{i}{n})$$

berechnet, wobei

m    die Mitte eines typischen normierten Formteils im Formwerkzeug,
a    der Temperatur-Leitwert der Formmasse,
tn   die Nachdruckzeit,
n    die Anzahl der Zeitstützstellen im Nachdruckzeitverlauf,
i    die momentane Zeitstützstelle ist und
F    die normierte Temperatur-Funktion ist, deren Werte über die Wärmeleitungsgleichung berechnet und in einer ersten Speichertabelle des Prozeßrechners gespeichert sind,

und daß bei einer Veränderung der Werkzeug-Temperatur Tf und/oder der Formmasse-Temperatur Tm zu den Referenz-Temperaturwerten bzw. Referenznachdruckwerten entsprechenden Zeitstützstellen über die Gleichung

2

$$ti = \frac{1}{a} * F^{-1}\left[\frac{Ti - Tf}{Tm - Tf}\right]$$

zum Erhalt eines neuen Nachdruckzeitverlaufes ermittelt werden, wobei $F^{-1}$ als inverse Funktion der Funktion F in einer zweiten Speichertabelle gespeichert ist.

Der Abkühlvorgang im Formteil in der Nachdruckphase ist mittels der Wärmeleitungsgleichung ermittelbar. Sie bestimmt das gesamte räumliche und zeitliche Verhalten einer Temperaturverteilung, wenn die Randbedingungen, d.h. die Wärmeübergangsverhältnisse am Rand des Formteils gegeben sind. Die Wärmeleitungsgleichung lautet:

$$a * \Delta T(x, y, z, t) = \frac{\partial T(x,y,z,t)}{\partial t} \qquad (1)$$

wobei die Abkürzung für den Laplaceoperator bedeutet:

$$\Delta = \frac{\partial^2}{\partial x^2} + \frac{\partial^2}{\partial y^2} + \frac{\partial^2}{\partial z^2} \qquad (2)$$

und die Konstante a als Temperaturleitwert bezeichnet wird, und x,y,z die räumliche und t die zeitliche Abhängigkeit kennzeichnen.

Die vor der Einspritzung vor der Düse erwärmte Formmasse hat annähernd eine homogene Temperatur, d.h. sie ist isotherm. Daher kann als Anfangsbedingung formuliert werden:

$T(x, y, z, 0) = Tm0, \qquad (3)$

d.h. die Formmasse-Temperatur ist zu Beginn des Einspritzvorganges gleich der Temperatur Tm0. Als Randbedingung kann angegeben werden:

$T(r,t) = Tf0 \qquad (4).$

Hierbei wird vorausgesetzt, daß die Werkzeug-Temperatur Tf im wesentlichen zeitkonstant und isotherm ist, d.h. am Rand r des Formteiles herrscht während des ganzen Abkühlvorganges die Temperatur Tf0.

Eine Lösung der Wärmeleitungsgleichung ist nur für einfache Geometrien des Formteiles ermittelbar. Für kompliziertere Formteile wird ebenfalls eine solche einfache (typische) Geometrie des Formteiles als Grundlage der Temperaturberechnung herangezogen. Bei diesen einfachen Formteilen ist die räumliche Abhängigkeit auf eine Koordinate (x) bezogen.

3

Als Lösung der Wärmeleitungsgleichung (1) ergibt sich die Gleichung:

$$T = Tf0 + (Tm0 - Tf0) * F \left( \frac{x}{r}, \frac{a * t}{r^2} \right) \qquad (5),$$

wobei die Funktion F die normierte Temperatur-Funktion der normierten Wärmeleitungsgleichung

$$\Delta F = \frac{\partial F}{\partial t} \qquad (6)$$

ist mit der Anfangsbedingung

$$F(x,0) = 1 \qquad (7)$$

und der Randbedingung

$$F(1,t) = 0 \qquad (8).$$

Bei der Normung wird das zwischen Tm0 und Tf0 vorliegende Temperaturgefälle als ein Temperaturgefälle zwischen 1 °C und 0 °C festgelegt.

Ist das typische Formteil eine Platte mit der Normdicke 2, so läßt sich als Lösung angeben:

$$F(x,t) = \frac{4}{\pi} \sum_{k=0}^{\infty} \exp\left\{ -\left[ (2k+1) \frac{\pi}{2} \right]^2 t \right\} \frac{(-1)^k}{2k+1} \cos (2k+1) \frac{\pi x}{2} \qquad (9).$$

Für einen Zylinder mit dem Normradius 1 ergibt sich:

$$F(x,t) = 2 \sum_{k=1}^{\infty} \frac{J_0(R_k x)}{R_k J_1(R)} \exp\left\{ -R_k^2 * t \right\} \qquad (10),$$

wobei $J_0$ die Bessel-Funktion nullter Ordnung und $J_1$ die Besselfunktion erster Ordnung sind, und für jedes $R_k$ gilt: $J_0(R_k) = 0$. Aus der letztgenannten Gleichung läßt sich $R_k$ ermitteln. Für eine Kugel mit dem Normradius 1 ergibt sich:

4

$$F(x,t) = 2 \sum_{k=1}^{\infty} (-1)^{k+1} * \frac{\sin k \widetilde{\pi} x}{k \widetilde{\pi} x} * \exp\left\{ -\left[ k \widetilde{\pi} \right]^2 t \right\} \quad (11).$$

Zur Berechnung der Temperatur in der Mitte m eines typischen Formkörpers muß die Koordinate x gleich 0 gesetzt werden.

Besteht das zu spritzende Formteil nicht nur aus einem typischen Formteil, muß zur Berechnung ein typisches Formteil herangezogen werden, welches ein Teil dieses zu spritzenden Formteiles ist und welches beim Spritzgießen am schwierigsten zu realisieren ist. Für jede der drei oben berechneten Formteilgeometrien ergibt sich nämlich ein unterschiedlicher Temperatur-Zeitverlauf.

Die Werte der Funktion F(x,t) für das jeweilige Formteil, d.h. die Abhängigkeit der Temperatur von der Zeit, sind in einer ersten Speichertabelle des Prozeßrechners gespeichert. Dadurch wird bei der Berechnung einer Temperaturstützstelle (Temperatur Ti zum Zeitpunkt ti = tn * i/n) über die Gleichung

$$Ti = Tf + (Tm - Tf) * F(m, a * tn * \tfrac{i}{n}) \quad (12)$$

nicht mehr die Funktion F berechnet, sondern der entsprechende Funktionswert aus der Tabelle gewonnen. Hierdurch wird sehr schnell die Temperatur berechnet.

Vor dem eigentlichen Produktionsbeginn der Spritzgießteile wird vom Bediener der Spritzgießmaschine ein bestimmter optimaler Nachdruckzeitverlauf an der Maschine entweder durch Ausprobieren oder durch eine Berechnung für eine bestimmte Werkzeug-Temperatur Tf und Formmasse-Temperatur Tm eingestellt. Der Prozeßrechner ermittelt aus diesem Referenz-Nachdruckzeitverlauf den entsprechenden Temperatur-Zeitverlauf.

Wird vor Beginn oder während einer Nachdruckphase festgestellt, daß sich die Werkzeugtemperatur Tf und/oder die Formmasse-Temperatur Tm verändert haben, muß ein neuer Nachdruckzeitverlauf ermittelt werden. Dazu wird für jede beim Referenz-Nachdruckzeitverlauf ermittelte Temperatur-Stützstelle eine neue Zeitstützstelle ti über die Gleichung

$$ti = \frac{1}{a} * F^{-1} \left[ \frac{Ti - Tf}{Tm - Tf} \right] \quad (13)$$

berechnet. $F^{-1}$ ist die inverse Funktion der Funktion F. Diese inverse Funktion $F^{-1}$ ist ebenfalls für die typischen Formteile berechnet worden und in einer zweiten Speichertabelle im Prozeßrechner gespeichert. Nach der Berechnung der neuen Zeitverläufe wird mit dem neuen Nachdruckzeitverlauf die Spritzgießmaschine gesteuert.

Aufgrund des erfindungsgemäßen Verfahrens wird bei Veränderung der Werkzeug-Temperatur und/oder der Formmasse-Temperatur sofort ein neuer Nachdruckzeitverlauf berechnet. Dieser Nachdruckzeitverlauf wird sofort im Spritzzyklus als neuer Nachdruckzeitverlauf übernommen. Da keine umfangreichen Rechnungen vorgenommen werden, kann zur Berechnung des Nachdruckzeitverlaufes ein handelsüblicher Prozeßrechner mit einer Taktrate von z.B. 3 MHz verwendet werden.

Ein Ausführungsbeispiel der Erfindung wird nachstehend anhand der Zeichnungen näher erläutert. Es zeigen:

Fig. 1 eine Spritzgießmaschine mit einer Steuerungsvorrichtung und einem Prozeßrechner,

Fig. 2 ein Flußablaufdiagramm zur Erläuterung einzelner Verfahrensschritte, die der Prozeßrechner durchführt, und

Fig. 3 ein Beispiel für einen Referenz-Nachdruckzeitverlauf in einem pVT-Diagramm.

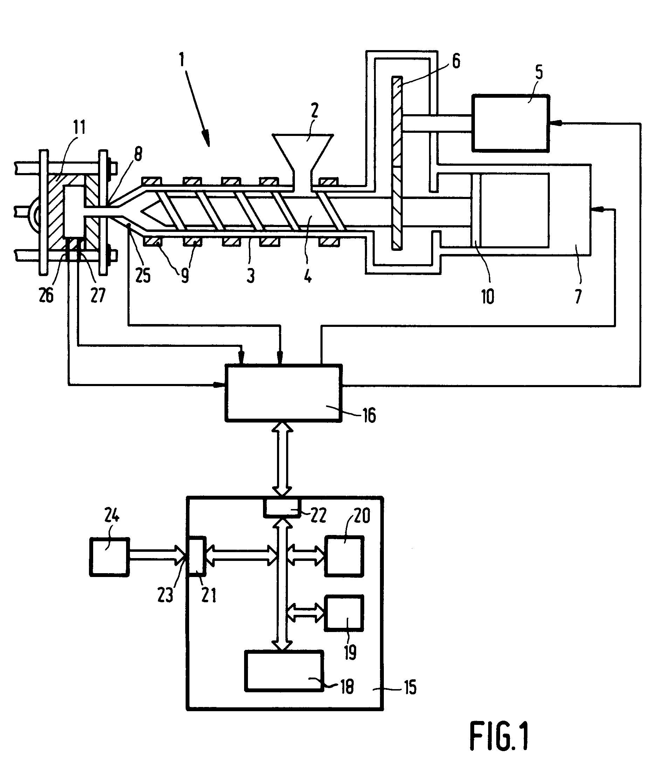

Die in Fig. 1 schematisch dargestellte Spritzgießmaschine 1 weist einen Trichter 2 auf, über den Plastikgranulat in ein Schneckengehäuse 3 einfüllbar ist. Das Schneckengehäuse enthält eine drehbar und axial verschiebbar gelagerte Schnecke 4. Die Drehbewegung der Schnecke 4 wird mittels eines Getriebes 6 und eines Motors 5 bewirkt. Die axiale Verschiebung der Schnecke 4 wird mittels eines hydraulischen Druckantriebes 7 bewerkstelligt, der auf einen am Ende der Schnecke 4 angebrachten Kolben 10 einen Druck ausübt. Das andere Ende der Schnecke 4 zeigt auf eine Einspritzdüse 8. Außerhalb des Schneckengehäuses 3 sind noch Heizungskörper 9 angebracht, die das Plastikgranulat erwärmen, um eine plastifizierte Formmasse zu erzeugen.

Vor der Einspritzdüse 8 ist ein Formwerkzeug 11 angeordnet, das mittels einer hier nicht näher dargestellten Druckvorrichtung an die Einspritzdüse 8 angepreßt wird und nach Beendigung des Spritzgießprozesses das Formwerkzeug 11 von der Einspritzdüse 8 löst und das erstarrte Formteil nach Ende des Spritzgießprozesses auswirft. Mittels eines Prozeßrechners 15 und einer von dem Prozeßrechner 15 gesteuerten Steuerungsvorrichtung 16 werden die Drücke für die axiale Bewegung der Schnecke 4 und für das Formwerkzeug 11 erzeugt. Des weiteren steuert die Steuerungsvorrichtung 16 die Drehgeschwindigkeit des Motors 5 und weitere hier nicht näher beschriebene Größen, wie z.B. die Temperatur der Heizungskörper 9.

Der Prozeßrechner 15 enthält eine zentrale Recheneinheit 18, z.B. einen Mikroprozessor, mindestens einen Schreib/Lesespeicher 19 (RAM), mindestens einen Festwertspeicher 20 (ROM), einen Eingabebaustein 21 und einen Ausgabebaustein 22. Der Prozeßrechner kann noch mit weiteren externen Speicherschaltungen verbunden sein z.B. einem Festplattenlaufwerk. Der Eingang 23 des Eingabebausteins 21 ist mit einer Eingabevorrichtung 24 verbunden, in die die vom Bediener gewünschten Parameter für die Spritzgießmaschine eingegeben werden. Die zentrale Recheneinheit 18 ist mit den einzelnen Bausteinen, d.h. Schreib/Lesespeicher 19, Festwertspeicher 20 und den Ein-und Ausgabebausteinen 21 und 22 über Steuer-, Daten- und Adressenleitungen verbunden. Im Festwertspeicher 20 ist ein Programm abgespeichert, das die zentrale Recheneinheit 18 ausführt. Im Schreib/Lesespeicher 19 werden veränderbare Daten während des Rechenvorgangs abgespeichert. Über den Ausgabebaustein 22 werden Daten für die Steuerungsvorrichtung 16 abgegeben, die die erforderlichen Drücke, z.B. für den hydraulischen Druckantrieb 7, erzeugt.

In der Steuerungsvorrichtung 16 ist auch eine Meßwertaufnahmevorrichtung angeordnet, die wenigstens mit zwei Temperatursensoren 25 und 26 und mindestens einem Drucksensor 27 verbunden sind. Der Temperatursensor 25 mißt die Formmasse-Temperatur Tm vor der Einspritzdüse 8, der Temperatursensor 26, der im Werkzeug 11 angeordnet ist, mißt die Werkzeug-Temperatur Tf und der Drucksensor 27 mißt den im Werkzeuginneren herrschenden Druck. Die von den Sensoren 25 bis 27 erzeugten Signale werden in der Meßwertaufnahmevorrichtung empfangen und über den Ausgabebaustein 22 dem Prozeßrechner 15 zugeführt.

Ein Spritzgießzyklus läßt sich in die Formfüllphase, Nachdruckphase, Entformungsphase und Auswurfphase einteilen. Während der Formfüllphase wird die plastifizierte Formmasse aus der Einspritzdüse 8 in das Werkzeug 11 gedrückt. Wenn das Werkzeug 11 vollständig gefüllt ist, d.h. es liegt ein bestimmter Druck im Werkzeug 11 vor, beginnt die Nachdruckphase. Während der Nachdruckphase wird der Druck kontinuierlich verringert. Am Ende der Nachdruckphase liegt Normaldruck (1 bar) vor. Während der darauffolgenden Entformungsphase wird das Formteil bis zu einer bestimmten Temperatur abgekühlt und in der anschließenden Auswurfphase aus dem Werkzeug geworfen. Während der Auswurfphase hat sich die Schnecke 4 auch von der Einspritzdüse 8 wegbewegt. Mit dem Ende der Auswurfphase beginnt ein neuer Spritzgießzyklus und damit ein neuer Formfüllvorgang.

Während der Nachdruckphase soll der Druck so gesteuert werden, daß kein Zufluß bzw. Abfluß von Formmasse zwischen Werkzeug 11 und Einspritzdüse 8 stattfindet. Findet ein solcher Fluß der Formmasse nämlich statt, entstehen unerwünschte Orientierungen im Formteilinneren. Um zu verhindern, daß bei einer Veränderung der Formmasse-Temperatur Tm und/oder der Werkzeug-Temperatur Tf ein Zu- bzw. Abfluß der Formmasse stattfindet, wird der Nachdruckzeitverlauf mit Hilfe des im folgenden zu beschreibenden Verfahrens gesteuert.

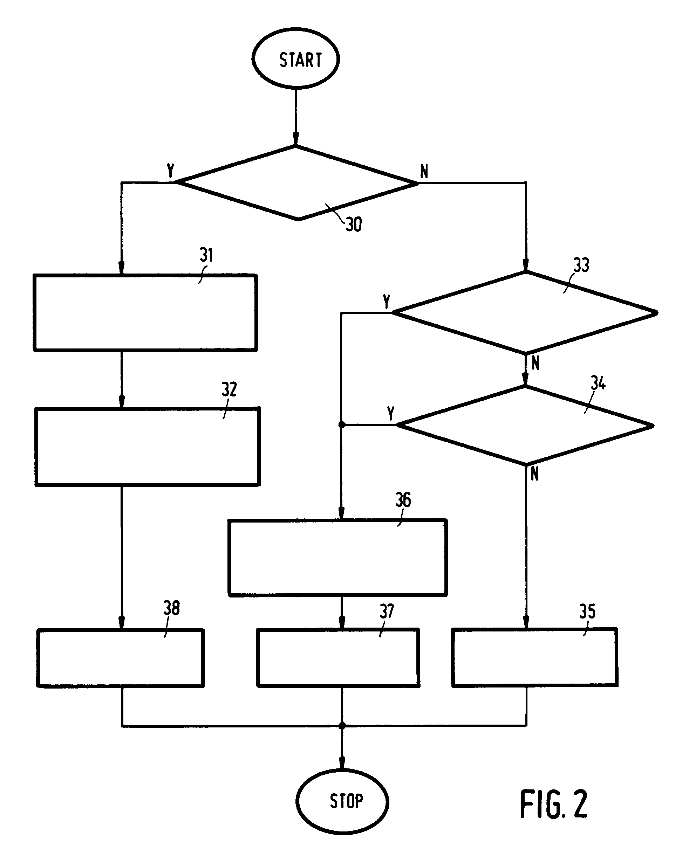

In Fig. 2 ist ein Flußablaufdiagramm dargestellt, mit welchem die einzelnen Verfahrensschritte erläutert werden, die zur Erzeugung eines Nachdruckzeitverlaufes führen. Das Flußablaufdiagramm stellt die Verfahrensschritte zur Berechnung des Nachdruckes während eines Spritzzyklusses dar. Zu Beginn (START) des Spritzgießprozesses wird von dem Bediener der Spritzgießmaschine ein Referenz-Nachdruckzeitverlauf erstellt (Block 30). Hierbei gibt der Bediener jeweils das typische Formteil, z.B. eine Platte, und deren Geometrien über die Eingabevorrichtung 24 ein. Aus diesem Referenz-Nachdruckzeitverlauf (Block 31), der den Nachdruck in Abhängigkeit von der Zeit darstellt, wird mit Hilfe der Gleichung (12) ein entsprechender Referenz-Temperaturzeitverlauf berechnet (Block 32). Die Werte der Funktion F sind hierbei in einer Tabelle im Festwertspeicher 20 abgelegt. Zu einer bestimmten Zeitstützstelle gibt es also eine entsprechende Nachdruckstützstelle und eine entsprechende Temperaturstützstelle. Entsprechend diesem Referenz-Nachdruckzeitverlauf wird die Spritzgießmaschine gefahren (Block 38).

Verändert sich nun die Formmasse-Temperatur Tm und/oder die Werkzeug-Temperatur Tf, muß ein neuer Nachdruckzeitverlauf berechnet werden. Gemäß dem Flußablaufdiagramm in Fig. 2 wird, wie in Block 33 dargestellt ist, zuerst abgefragt, ob eine Veränderung der Formmasse-Temperatur stattgefunden hat. Dieser Vergleich wird vor Beginn der Nachdruckphase durchgeführt. Ist dies nicht der Fall, wird, wie in Block 34 dargestellt ist, abgefragt, ob eine Veränderung der Werkzeug-Temperatur sich ergeben hat. Ist dies ebenfalls nicht der Fall, wird der beim vorherigen Einspritzzyklus verwendete Nachdruckzeitverlauf gefahren. Hat jedoch eine Veränderung der Formmasse-Temperatur bzw. der Werkzeug-Temperatur stattgefunden, wird gemäß Gleichung (13) zu jeder Nachdruckstützstelle bzw. Temperaturstützstelle eine neue Zeitstützstelle ti berechnet (Block 36). Die Werte der Funktion $F^{-1}$ sind ebenfalls im Festwertspeicher 20 gespeichert. Nach Berechnung des neuen Nachdruckzeitverlaufes wird der neue Nachdruckzeitverlauf gefahren (Block 37). Es kann auch so vorgegangen werden, daß der laufende Nachruckzeitverlauf bei einer Temperaturveränderung neu berechnet und verändert wird.

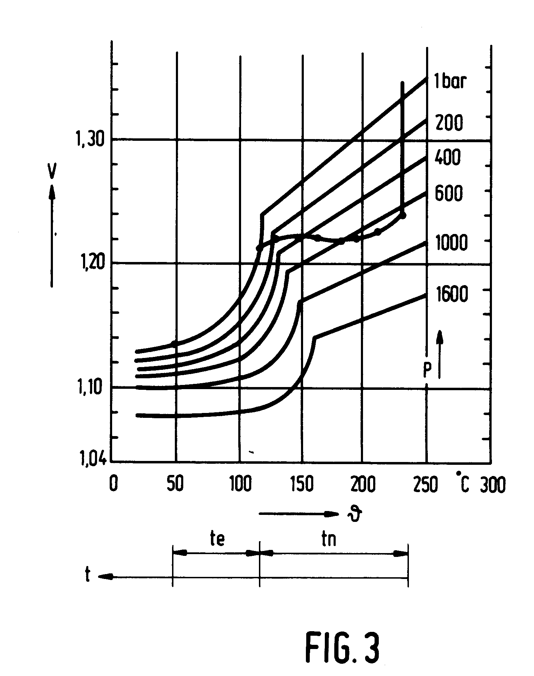

In Fig. 3 ist der Druckverlauf im Werkzeuginneren für ein bestimmtes Formteil, das aus dem Werkstoff Polypropylen besteht, dargestellt. Während der Einspritzphase wird bei einer Temperatur von ca. 230°C der Druck im Werkzeug schlagartig von 1 bar auf ca. 700 bar erhöht. Während der Nachdruckphase (Nachdruckzeit tn) wird der Druck langsam auf 1 bar verringert und gleichzeitig die Temperatur des Formteiles auf ca. 120°C abgekühlt. In der anschließenden Entformungsphase (Entformungszeit te) kühlt das Formteil auf ca. 50°C ab, wobei eine Schwindung des Formteiles stattfindet.

## Patentansprüche

1. Verfahren zur Steuerung des Nachdruckzeitverlaufes einer Spritzgießmaschine mit einer Plastifizier- und Spritzeinheit, die eine von einem hydraulischen Druckantrieb betätigte Schnecke zum Transport der plastifizierten Formmasse in eine Einspritzdüse enthält, und mit einem vor der Einspritzdüse angeordneten Formwerkzeug zur Erzeugung eines Formteiles, sowie mit einem den hydraulischen Druckantrieb steuernden Prozeßrechner, der einen Nachdruckzeitverlauf erzeugt und einen neuen Nachdruckzeitverlauf bei Veränderung einer vor der Einspritzdüse gemessene Formmassentemperatur Tm und/oder der im Formwerkzeug gemessenen Werkzeugtemperatur Tf berechnet,
dadurch gekennzeichnet, daß

   - zu Beginn des Spritzgießprozesses aufgrund der Geometrie des Formteils die normierte Temperaturfunktion F gewählt und zusammen mit ihrer Inversen im Speicher (20) über die Eingabevorrichtung (24) tabellarisch gespeichert wird und unter Berücksichtigung vorbestimmter Temperaturen Tm und Tf ein Referenz-Nachdruckzeitverlauf erzeugt wird,
   - wobei die zugehörigen Referenz-Temperaturwerte in der Recheneinheit (18) über die Gleichung

$$Ti = Tf + (Tm - Tf) * F(m, a * t * \tfrac{i}{n})$$

   ermittelt werden, wobei

   m      die Mitte eines typischen normierten Formteils im Formwerkzeug,
   a      der Temperatur-Leitwert der Formmasse,
   tn      die Nachdruckzeit,
   n      die Anzahl der Zeitstützstellen im Nachdruckzeitverlauf,
   i      die momentane Zeitstützstelle ist und
   - somit für die Steuervorrichtung (16) jeder i-ten Zeitstützstelle eine entsprechende Temperatur- und Nachdruckstützstelle für den Antrieb (5, 7) zugeordnet wird, und
   - bei Abweichung mindestens einer der gemessenen Temperaturen Tm und Tf während des Spritzprozesses vor Beginn der Nachdruckphase zum Erhalt eines neuen Referenz-Nachdruckzeitverlaufes der Rechner (15) unter Berücksichtigung der bisherigen Stützstellen $T_i$ und der Gleichung

$$ti = \frac{1}{a} * F^{-1}\left[ \frac{Ti - Tf}{Tm - Tf} \right]$$

neue Zeitstützstellen ti errechnet, wodurch über die Steuereinheit (16) neue angepaßte Nachdruckstützstellen dem Antrieb (5, 7) zugeordnet werden.

**2.** Spritzgießmaschine zur Durchführung des Verfahrens nach Anspruch 1

mit einer Plastifizier- und spritzeinheit, die eine von einem hydraulischen Druckantrieb (7) betätigte Schnecke (4) zum Transport der plastifizierten Formmasse in eine Einspritzdüse (8) enthält, und mit einem vor der Einspritzdüse (8) angeordneten Formwerkzeug (11) zur Erzeugung eines Formteiles,
sowie mit einem den hydraulischen Druckantrieb (7) steuernden Prozeßrechner (15), der einen vorgegebenen wählbaren Referenz-Nachdruckzeitverlauf speichert und die dazugehörigen Temperaturwerte berechnet und der einen neuen Nachdruckzeitverlauf bei Veränderung einer vor der Einspritzdüse gemessenen Formmasse-Temperatur Tm und/oder der im Formwerkzeug gemessenen Werkzeug-Temperatur Tf berechnet, <u>dadurch gekennzeichnet,</u>
daß der Prozeßrechner (15) die zum Referenz-Nachdruckzeitverlauf zugehörigen Referenz-Temperatur-werte anhand der Gleichung

$$Ti = Tf + (Tm - Tf) * F(m, a * t * \frac{i}{n})$$

berechnet, wobei

| | |
|---|---|
| m | die Mitte eines typischen normierten Formteils im Formwerkzeug, |
| a | der Temperatur-Leitwert der Formmasse, |
| tn | die Nachdruckzeit, |
| n | die Anzahl der Zeitstützstellen im Nachdruckzeitverlauf, |
| i | die momentane Zeitstützstelle ist und |
| F | die normierte Temperatur-Funktion ist, deren Werte über die Wärmeleitungsgleichung berechnet und in einer ersten Speichertabelle des Prozeßrechners gespeichert sind, |

und daß der Prozeßrechner (15) bei einer Veränderung der Werkzeug-Temperatur Tf und/oder der Formmasse-Temperatur Tm zu den Referenz-Temperaturwerten bzw. Referenznachdruckwerten entsprechenden Zeitstützstellen über die Gleichung

$$ti = \frac{1}{a} * F^{-1} \left[ \frac{Ti - Tf}{Tm - Tf} \right]$$

zum Erhalt eines neuen Nachdruckzeitverlaufes ermittelt, wobei $F^{-1}$ als inverse Funktion der Funktion F in einer zweiten Speichertabelle gespeichert ist.

**Claims**

**1.** A method of controlling the follow-up pressure variation in time of an injection-moulding machine, comprising a plastification and moulding unit which includes a worm which is operated by a hydraulic pressure drive in order to transport the plastified moulding mass into an injection nozzle, and a moulding tool which is arranged in front of the injection nozzle in order to produce a moulding, as well as a process computer which controls the hydraulic pressure drive which produces a follow-up pressure variation in time and which calculates a new follow-up pressure variation in time in the event of a variation of the moulding mass temperature Tm measured in front of the injection nozzle and/or of the tool temperature Tf measured in the moulding tool, <u>characterized in that,</u>

- at the beginning of the injection moulding process the standardized temperature function F is chosen on the basis of the geometry of the moulding and is stored, together with its inverse in the form of a table in the memory (20) <u>via</u> the input unit (24), a reference follow-up pressure variation in time being established while taking into account predetermined temperatures Tm and Tf,

- the associated reference temperature values are calculated in the processor unit (18) by way of the equation

$$Ti = Tf + (Tm - Tf) * F(m, a * tn * \tfrac{i}{n}),$$

where

 m  represents the centre of a typical, standardized moulding in the moulding tool,

 a  represents the thermal conductance of the moulding mass,

 tn  represents the follow-up pressure time,

 n  represents the number of sampling instants in the follow-up pressure variation in time,

 i  represents the instantaneous sampling instant, and

- consequently, for the control device (16) a corresponding temperature and follow-up pressure sample for the drive (5, 7) is associated with every $i^{th}$ sampling instant,

- upon deviation of at least one of the measured temperatures Tm and Tf during the moulding process prior to the start of the follow-up pressure phase, the computer (15) calculates, in order to obtain a new follow-up pressure variation, new sampling instants ti while taking into account the sampling instants $T_i$ used thus far and using the equation

$$ti = \frac{1}{a} * F^{-1} \left[ \frac{Ti - Tf}{Tm - Tf} \right]$$

so that via the control unit (16) new, adapted follow-up pressure samples are assigned to the drive (5, 7).

2. An injection-moulding machine for carrying out the method claimed in Claim 1, comprising a plastification and injection unit which includes a worm (4) which is operated by a hydraulic pressure drive (7) in order to transport the plastified moulding mass into an injection nozzle (8), and a moulding tool (11) which is arranged in front of the injection nozzle (8) in order to produce a moulding, as well as a process computer (15) which controls the hydraulic pressure drive (7), which stores a given, selectable reference follow-up pressure variation in time, and calculates the temperature values associated therewith, and which calculates a new follow-up pressure variation in time in the event of a variation of a moulding mass temperature Tm measured in front of the injection nozzle and/or of the tool temperature Tf measured in the tool, <u>characterized in that</u> the process computer (15) calculates the reference temperature values associated with the reference follow-up pressure variation in time by means of the equation

$$Ti = Tf + (Tm - Tf) * F(m, a * tn * \tfrac{i}{n}),$$

where

 m  represents the centre of a typical, standardized moulding in the moulding tool,

 a  represents the thermal conductance of the moulding mass,

 tn  represents the follow-up pressure time,

 n  represents the number of sampling instants in the follow-up pressure variation in time,

 i  represents the instantaneous sampling instant, and

 F  represents the standardized temperature function, whose values are calculated <u>via</u> the heat conduction equation and are stored in a first storage table of the process computer,

and that the process computer (15) determines, in the event of a variation of the tool temperature Tf and/or of the moulding mass temperature Tm, sampling instants corresponding to the reference temperature values or reference follow-up pressure values, respectively, <u>via</u> the equation

$$ti = \frac{1}{a} * F^{-1} \left[ \frac{Ti - Tf}{Tm - Tf} \right]$$

in order to obtain a new follow-up pressure variation in time, where $F^{-1}$ is stored as an inverse function of the function F in a second storage table.

**Revendications**

1. Procédé de commande de la courbe de temps de maintien en pression d'une presse de moulage par injection comportant une unité de plastification et d'injection qui comprend une vis sans fin actionnée par un vérin de compression hydraulique pour acheminer la matière à mouler plastifiée dans une buse d'injection, et un outil de moulage agencé devant la buse d'injection pour produire une pièce moulée, ainsi qu'un ordinateur industriel commandant le vérin de compression hydraulique, qui produit une courbe de temps de maintien en pression et calcule une nouvelle courbe de temps de maintien en pression à un changement de température de la matière à mouler Tm mesurée devant la buse d'injection et/ou de température de l'outil Tf mesurée dans l'outil de moulage, caractérisé en ce que :
   - au début du procédé de moulage par injection, sur base de la géométrie de la pièce moulée, on choisit la fonction de température normalisée F et on la mémorise conjointement avec son inverse dans la mémoire (20) via le dispositif d'entrée (24) sous forme de table et on produit, en tenant compte des températures prédéterminées Tm et Tf, une courbe de temps de maintien en pression de référence,
   - les valeurs de la température de référence correspondantes étant déterminées dans l'unité de calcul (18) par l'équation :

   $$Ti = Tf + (Tm - Tf) * F(m, a * tn * \tfrac{i}{n})$$

   dans laquelle :
   - m   est le centre d'une pièce moulée normalisée typique dans l'outil de moulage;
   - a   est la valeur de conductivité de la température de la matière à mouler;
   - tn   est le temps de maintien en pression;
   - n   est le nombre de points auxiliaires de temps dans la courbe de temps de maintien en pression;
   - i   est le point auxiliaire de temps instantané, et
   - de la sorte, pour le dispositif de commande (16), à chaque i-ème point auxiliaire de temps sont affectés un point auxiliaire de température et un point auxiliaire de maintien en pression correspondants pour l'entraînement (5, 7), et
   - dans le cas d'un écart d'au moins une des températures mesurées Tm et Tf au cours du procédé d'injection, on calcule, avant le début de la phase de maintien en pression, de nouveaux points auxiliaires de temps ti afin d'obtenir une nouvelle courbe de maintien en pression de référence de l'ordinateur (15) en tenant compte des points auxiliaires Ti obtenus jusque là et de l'équation :

   $$ti = \frac{1}{a} * F^{-1} \left| \frac{Ti - Tf}{Tm - Tf} \right|$$

   opération par laquelle de nouveaux points auxiliaires de maintien en pression adaptés sont affectés à l'entraînement (5, 7) via l'unité de commande (16).

2. Presse de moulage par injection permettant de réaliser le procédé de la revendication 1, comportant une unité de plastification et d'injection, qui contient une vis sans fin (4) actionnée par un vérin de compression hydraulique (7) pour acheminer la matière à mouler plastifiée dans une buse d'injection (8), et un outil de moulage (11) agencé devant la buse d'injection (8) pour produire une pièce moulée, ainsi qu'un ordinateur industriel (15) commandant le vérin de compression hydraulique (7), qui stocke une courbe de temps de maintien en pression de référence prédéterminée sélectionnable, calcule les valeurs des températures correspondantes et calcule également une nouvelle courbe de temps de maintien en pression lors d'une modification d'une température de la matière à mouler Tm mesurée devant la buse d'injection et/ou la température de l'outil Tf mesurée dans l'outil de moulage, caractérisée en ce que l'ordinateur industriel (15) calcule les valeurs des températures de référence correspondant à la courbe de temps de maintien en pression de référence selon l'équation :

   $$Ti = Tf + (Tm - Tf) * F(m, a * tn * \tfrac{i}{n})$$

dans laquelle :

m est le centre d'une pièce moulée normalisée typique dans l'outil de moulage;

a est la valeur de conductivité de la température de la matière à mouler;

tn est le temps de maintien en pression;

n est le nombre de points auxiliaires de temps dans la courbe de temps de maintien en pression;

i est le point auxiliaire de temps instantané, et

F est la fonction de température normalisée, dont les valeurs ont été calculées par l'équation de la conduction thermique et ont été stockées dans une première table de mémorisation de l'ordinateur industriel, et

dans le cas d'une modification de la température de l'outil Tf et/ou de la température de la matière à mouler Tm vis-à-vis des valeurs des températures de référence ou des valeurs de maintien en pression de référence, l'ordinateur industriel calcule des points auxiliaires de temps correspondants par l'équation :

$$ti = \frac{1}{a} * F^{-1} \left| \frac{Ti - Tf}{Tm - Tf} \right|$$

pour obtenir une nouvelle courbe de temps de maintien en pression, $F^{-1}$ étant stockée en tant que fonction inverse de la fonction F dans une deuxième table de mémorisation.

FIG.1

FIG. 2

FIG. 3